# EUROPÄISCHE PATENTSCHRIFT

(11) **EP 0 554 432 B1**
(45) Veröffentlichungstag und Bekanntmachung des Hinweises auf die Patenterteilung: **20.09.1995**
(21) Anmeldenummer: 92918106.3
(22) Anmeldetag: 26.08.1992
(51) Int. Cl.: B60R 7/08, A45C 11/00

(54) **BEHÄLTER FÜR FLACHTEILE, INSBESONDERE MÜNZEN**
HOLDER FOR FLAT ITEMS, IN PARTICULAR COINS
BOITE POUR OBJETS PLATS, EN PARTICULIER POUR PIECES DE MONNAIE

(30) Priorität: 04.09.1991 DE 4129392
(43) Veröffentlichungstag der Anmeldung: 11.08.1993
(73) Patentinhaber: fischerwerke Artur Fischer GmbH & Co. KG, D-72178 Waldachtal (DE)
(72) Erfinder: NEHL, Wolfgang, D-7244 Tumlingen/Waldachtal 3 (DE); SACKMANN, Karl-Hans, D-7808 Waldkirch (DE)
(86) Internationale Anmeldenummer: EP9201957
(87) Internationale Veröffentlichungsnummer: WO9304894

(56) Entgegenhaltungen:
- DE-A- 3 015 748
- DE-U- 8 806 407
- US-A- 1 655 390
- US-A- 2 800 360

## Beschreibung

Die Erfindung betrifft einen Behälter für Flachteile, insbesondere Münzen, als Teil eines in ein Kraftfahrzeug einsetzbaren Aufbewahrungssystems für Tonbandkassetten oder dgl. gemäß der Gattung des Anspruches 1.

Gemäß der DE-A-3 015 748 sind für die Aufbewahrung von Kassetten in Fahrzeugen derartige Behälter bekannt, die aus mehreren, an einer Stirnseite offenen Gehäuse zusammengesetzt sind. In jedem Gehäuse ist ein Schieber eingesetzt, auf dem die Kassette aufgelegt und zur Aufbewahrung in das Gehäuse eingeschoben wird. Zur Entnahme der Kassette wird der Schieber mittels einer Verriegelungstaste entriegelt, wobei eine zwischen Schieberrückwand und Gehäuse angeordnete Druckfeder den Schieber mit der Kassette aus dem Gehäuse herausschiebt.

Neben der Aufbewahrung von Kassetten ist es häufig erwünscht, auch andere Gegenstände, insbesondere Münzen, im Fahrzeug aufzubewahren. Es wurden daher auch schon spezielle Münzhalter vorgeschlagen, die am Armaturenbrett des Fahrzeuges durch Klebstreifen befestigbar sind. Des weiteren ist es bekannt, Münzhalter beispielsweise im Handschuhfach zu integrieren.

In der Regel sind diese Münzhalter so gestaltet, daß sie nur zur Aufnahme einer speziellen Münzengröße geeignet sind. Beim Einsetzen kleinerer Münzen ergeben sich lästige Geräusche, die wiederum dazu führen, daß häufig die integrierten Münzhalter nicht verwendet werden. Schließlich sind bei grenzüberschreitenden Fahrten wegen der unterschiedlichen Münzgrößen die Münzhalter ebenfalls nicht verwendbar.

Der Erfindung liegt daher die Aufgabe zugrunde, einen Behälter für Flachteile, insbesondere Münzen, zu schaffen, der als Teil eines in ein Kraftfahrzeug einsetzbaren Aufbewahrungssystems für Tonbandkassetten in einfacher und ästhetischen Ansprüchen genügender Weise in ein Fahrzeug einbaubar ist und die Aufbewahrung von Münzen unterschiedlicher Größe geräuschfrei ermöglicht.

Die Lösung dieser Aufgabe wird durch die im Anspruch 1 angegebenen Merkmale erreicht. Durch den mit einem beweglichen Fachboden ausgestatteten Schieber können beliebige Flachteile, insbesondere Münzen, unterschiedlicher Größe in den Behälter eingelegt werden. Beim Einschieben des Schiebers in das Gehäuse wird der Fachboden durch Federelemente gegen die obere Wandung des Gehäuses gedrückt, so daß die eingelegten Flachteile und Münzen eingeklemmt werden. Damit sitzen die Münzen unverrückbar fest und können beim Fahren keine Geräusche mehr erzeugen. Die Außenkontur des Gehäuses ist mit den für die Aufbewahrung der Tonbandkassetten verwendeten Gehäuse identisch. Zur Ausstattung eines Fahrzeuges mit einem Münzhalter ist es daher lediglich erforderlich, einen Kassettenbehälter eines aus mehreren solchen Behältern bestehenden Archivs gegen den Münzbehälter auszutauschen. Durch die Integration des Münzbehälters in ein Gesamtsystem für die Aufbewahrung von Gegenständen in Fahrzeugen werden sowohl die Gestaltungs- als auch Sicherheitsanforderungen erfüllt.

Die Beweglichkeit des Fachbodens wird dadurch sichergestellt, daß an seinen Längsseiten Führungsnocken angeordnet sind, die in entsprechende Nuten der Seitenwände des Schiebers geführt sind. Diese Nuten sind zur Oberkante der Seitenwände hin begrenzt, um ein Ausrasten des Fachbodens aus dem Schieber zu vermeiden.

Durch eine wellenförmige Gestaltung der Bodenfläche des Fachbodens wird die Entnahme der Münzen erleichtert. Eine am Fachboden angeordnete Umrandung schafft eine Begrenzung beim Einlegen der Münzen.

Zur Verbesserung der Verklemmung, insbesondere bei unterschiedlichen Dicken der eingelegten Münzen, können auf der Innenfläche der oberen Wandung des Gehäuses über den Fachboden sich erstreckende Schaumstreifen angebracht sein. Ebenso kann zur Erhöhung der Rutschsicherheit, insbesondere bei geöffnetem Schieber, der Fachboden mit einem Vlies belegt sein.

Es ist zweckmäßig, als Federelemente aus Metall gestanzte Blattfedern zu verwenden. Um den Fachboden parallel nach oben zu drücken, greifen am hinteren Ende des Fachbodens zwei paarweise angeordnete Federelemente und am vorderen Ende ein in der Mitte angeordnetes Federelement am Fachboden an. Die am hinteren Ende angreifenden Federelemente sind mit einem Ende am Gehäuse befestigt und trapezförmig gebogen, so daß eine gegen den Fachboden gerichtete Anlaufschräge entsteht. Das am vorderen Ende des Fachbodens angreifende Federelement ist mit einem Ende auf der Unterseite des Fachbodens befestigt, während das andere Ende bei eingeschobenem Schieber gegen die untere Wandung des Gehäuses drückt.

Die Erfindung wird nachfolgend anhand der Zeichnung näher erläutert.

Es zeigen:

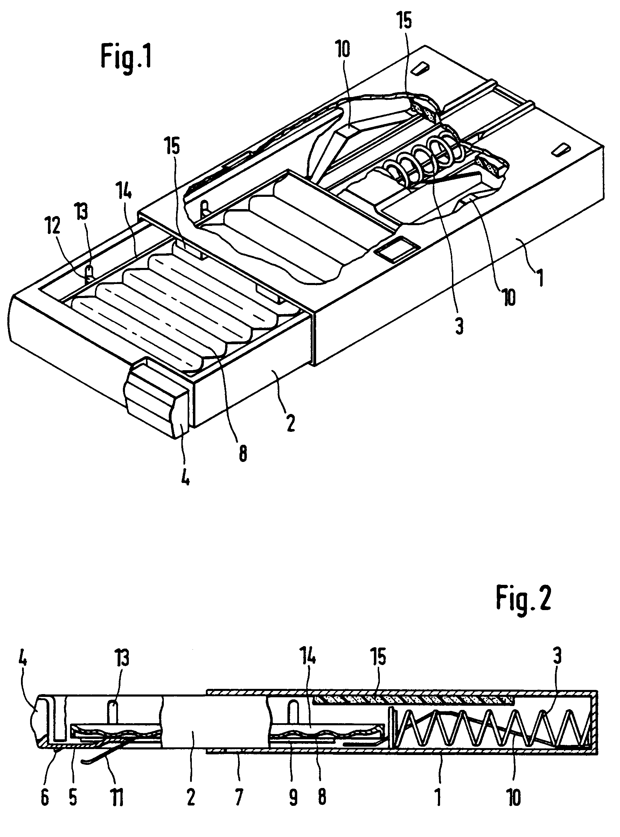

- Figur 1: den Behälter in perspektivischer Ansicht und
- Figur 2: den Behälter nach Figur 1 in Seitenansicht, jeweils mit teilweise aufgeschnittenem Gehäuse.

Der Behälter besteht aus einem einseitig offenen Gehäuse 1, in das ein Schieber 2 gegen eine Feder 3 einschiebbar ist. An der Stirnseite des Schiebers ist eine Taste 4 angeordnet, die über eine federnde Zunge 5 einstückig mit dem Schieber 2 verbunden ist. An der Unterseite der Zunge 5 befindet sich ein Verriegelungszapfen 6, der beim Schließen des Schiebers in eine Aussparung 7 des Gehäuses 1 einrastet. Zum Öffnen wird die Taste 4 leicht nach oben gedrückt, so daß der Verriegelungszapfen 6 wieder aus der Aussparung 7 ausrasten kann.

Zur Aufbewahrung von Flachteilen, insbesondere Münzen, ist in dem rahmenförmigen Schieber 2 ein Fachboden 8 eingesetzt, der im ausgefahrenen Zustand des Schiebers 2 auf an der Innenwandung des Schiebers angeordneten Abstützleisten 9 aufsitzt. Beim Einschieben des Schiebers in das Gehäuse wird der Fachboden 8 durch die Federelemente 10, 11 gegen die obere Gehäusewandung gedrückt. Dabei wird der Fachboden 8 durch seitlich an seinen Längsseiten angeordneten Führungsnocken 12, die in senkrecht angeordneten Nuten 13 der Seitenwände des Schiebers 2 eingreifen, geführt.

Um eine möglichst parallele Verschiebung des Fachbodens 8 zu erhalten, sind die Federelemente 10 paarweise angeordnet. Zum Hochdrücken des vorderen Teils des Fachbodens ist das Federelement 11 mittig am vorderen Ende des Fachbodens befestigt. Das aus einem Federblech gestanzte Federelement 11 ragt mit seinem federnden Ende durch den rahmenförmigen Schieber 2 hindurch. Beim Einschieben des Schiebers 2 in das Gehäuse 1 stützt sich dieses Federelement an der Gehäuseunterwand ab und drückt das vordere Ende des Fachbodens 8 nach oben. Zur Sicherung des Fachbodens sind die Nuten 13 nach oben begrenzt.

Der Fachboden 8 ist zur Aufnahme von Flachteilen, insbesondere Münzen, vorgesehen. Um das Entnehmen der Münzen zu erleichtern, ist die Bodenfläche des Fachbodens wellenförmig ausgebildet. Ferner besitzt der Fachboden 8 eine Umrandung 14, die etwas geringer ist als die Dicke der Flachteile bzw. Münzen. Zur rutschfreien Fixierung und Verklemmung der Münzen sind an der Innenseite der oberen Gehäusewandung Schaumstreifen 15 angebracht, die sich mindestens über die Länge des Fachbodens erstrecken. Zur Erhöhung der Rutschsicherheit, insbesondere bei offenem Schieber, kann der Fachboden mit einem dünnen Vlies ausgelegt sein.

## Patentansprüche

1. Behälter für Flachteile, insbesondere Münzen, als Teil eines in ein Kraftfahrzeug einsetzbaren Aufbewahrungssystems für Tonbandkassetten und dgl., bestehend aus einem einseitig offenen Gehäuse (1) und einem an der offenen Seite des Gehäuses gegen eine Federkraft einschiebbaren und mit dem Gehäuse (1) verriegelbaren Schieber (2), **dadurch gekennzeichnet**, daß im Schieber (2) ein Fachboden (8) eingesetzt ist, der beim Einschieben des Schiebers (2) das Gehäuse (1) mit Federelementen (10, 11) gegen die obere Wandung des Gehäuses gedrückt wird.

2. Behälter nach Anspruch 1, **dadurch gekennzeichnet**, daß der Fachboden (8) an seinen Längsseiten Führungsnocken (12) aufweist, die in senkrecht angeordnete Nuten (13) der Seitenwände des Schiebers (2) geführt sind.

3. Behälter nach Anspruch 2, **dadurch gekennzeichnet**, daß die Nuten (13) zur Oberkante der Seitenwände hin begrenzt sind.

4. Behälter nach Anspruch 1, **dadurch gekennzeichnet**, daß die Bodenfläche des Fachbodens (8) wellenförmig ausgebildet ist.

5. Behälter nach Anspruch 1, **dadurch gekennzeichnet**, daß der Fachboden (8) eine Umrandung (14) aufweist, deren Höhe geringer ist als die Dicke der Flachteile bzw. Münzen.

6. Behälter nach Anspruch 1, **dadurch gekennzeichnet**, daß auf der Innenfläche der oberen Wandung des Gehäuses (1) über den Fachboden (8) sich erstreckende Schaumstreifen (15) angebracht sind.

7. Behälter nach Anspruch 1, **dadurch gekennzeichnet**, daß die Federelemente (10, 11) aus Federblech gestanzte Blattfedern sind, die am vorderen und hinteren Ende des Fachbodens (8) angreifen.

8. Behälter nach Anspruch 7, **dadurch gekennzeichnet**, daß die am hinteren Ende des Fachbodens (8) angreifenden Federelemente (10) paarweise angeordnet und mit einem Ende am Gehäuse (1) befestigt sind, und daß die Federelemente (10) eine trapezförmige Kontur mit einer gegen den Fachboden (8) gerichteten Anlaufschräge aufweisen.

9. Behälter nach Anspruch 7, **dadurch gekennzeichnet**, daß das am vorderen Ende des Fachbodens (8) angreifende Federelement (11) mit einem Ende an der Unterseite des Fachbodens (8) befestigt ist, und daß das andere Ende durch den eingeschobenen Schieber (2) gegen die untere Wandung des Gehäuses (1) drückt.

10. Behälter nach Anspruch 1, **dadurch gekennzeichnet**, daß der Fachboden (8) mit einem Vlies ausgelegt ist.

## Claims

1. A container for flat articles, especially coins, as part of a storage system for magnetic tape cassettes or the like suitable for installation in a motor vehicle, consisting of a housing (1) that is open on one side and a slider member (2) that is arranged to be inserted at the open side of the housing against a spring force and to be locked to the housing (1), characterized in that in the slider member (2) there is inserted a compartment floor (8) which, as the slider member (2) is pushed into the housing (1), is pressed by spring elements (10, 11) against the upper wailing of the housing.

2. A container according to claim 1, characterized in that on its longitudinal sides the compartment floor (8) has guide projections (12) which are guided in vertically arranged grooves (13) in the side walls of the slider member (2).

3. A container according to claim 2, characterized in that the grooves (13) are bounded towards the upper edge of the side walls.

4. A container according to claim 1, characterized in that the floor surface of the compartment floor (8) is of corrugated configuration.

5. A container according to claim 1, characterized in that the compartment floor (8) has an edging (14) around it, the height of which is less than the thickness of the flat articles or coins.

6. A container according to claim 1, characterized in that foam strips (15) extending above the compartment floor (8) are arranged on the inner surface of the upper walling of the housing (1).

7. A container according to claim 1, characterized in that the spring elements (10, 11) are leaf springs stamped from spring sheet, which engage the front and rear ends of the compartment floor (8).

8. A container according to claim 7, characterized in that the spring elements (10) engaging the rear end of the compartment floor (8) are arranged as a pair and are fixed at one end to the housing (1), and the spring elements (10) have a trapezoidal contour with a run-on slope directed towards the compartment floor (8).

9. A container according to claim 7, characterized in that the spring element (11) engaging the front end of the compartment floor (8) is fixed at one end to the underside of the compartment floor (8), and the other end presses through the inserted slider member (2) against the lower walling of the housing (1).

10. A container according to claim 1, characterized in that the compartment floor (8) is provided with a fleece.

## Revendications

1. Boîte pour objets plats, en particulier pour pièces de monnaie, - cette boîte faisant partie d' un système utilisable dans un véhicule automobile pour le rangement de cassettes audio et objets similaires, constituée d'un corps (1) ouvert d'un côté, et d'un élément coulissant (2) pouvant être inséré du côté ouvert du corps en s'opposant à l'action d'un ressort, et pouvant être verrouillé sur ledit corps (1), caractérisée par le fait qu'un fond alvéolé (8) intégré dans l'élément coulissant (2) est poussé par des organes élastiques (10, 11), lors de l'insertion de l'élément coulissant (2) dans le corps (1), contre la paroi supérieure dudit corps.

2. Boîte selon la revendication 1, caractérisée par le fait que le fond alvéolé (8) présente, sur ses côtés longitudinaux, des protubérances de guidage (12), qui sont guidées dans des rainures verticales (13) des parois latérales de l'élément coulissant (2).

3. Boîte selon la revendication 2, caractérisée par le fait que les rainures (13) sont limitées en direction du bord supérieur des parois latérales.

4. Boîte selon la revendication 1, caractérisée par le fait que la surface du fond alvéolé (8) est de réalisation ondulée.

5. Boîte selon la revendication 1, caractérisée par le fait que le fond alvéolé (8) comporte un rebord périphérique (14), dont la hauteur est plus faible que l'épaisseur respective des objets plats ou pièces de monnaie.

6. Boîte selon la revendication 1, caractérisée par le fait que des bandes (15) en mousse, s'étendant au-dessus du fond alvéolé (8), sont implantées à la face interne de la paroi supérieure du corps (1).

7. Boîte selon la revendication 1, caractérisée par le fait que les organes élastiques (10, 11) sont des lames de ressort produites par estampage à partir d'une tôle élastique, et venant en prise avec les extrémités antérieure et postérieure du fond alvéolé (8).

8. Boîte selon la revendication 7, caractérisée par le fait que les organes élastiques (10), venant en prise avec l'extrémité postérieure du fond alvéolé (8), sont agencés en une paire et sont fixés au corps (1) par une extrémité ; et par le fait que les organes élastiques (10) présentent une configuration trapézoïdale,munie d'une rampe biseautée dirigée vers le fond alvéolé (8).

9. Boîte selon la revendication 7, caractérisée par le fait que l'organe élastique (11), venant en prise avec l'extrémité antérieure du fond alvéolé (8), est fixé par une extrémité à la face inférieure dudit fond alvéolé (8) ; et par le fait que l'autre extrémité exerce une pression, par l'intermédiaire de l'élément coulissant (2) inséré, contre la paroi inférieure du corps (1).

10. Boîte selon la revendication 1, caractérisée par le fait que le fond alvéolé (8) est garni d'un voile de carde.
